# EUROPÄISCHE PATENTANMELDUNG

(11) **EP 0 875 334 A1**
(43) Veröffentlichungstag der Anmeldung: **04.11.1998**
(21) Anmeldenummer: 98107768.8
(22) Anmeldetag: 29.04.1998
(51) Int. Cl.: B23Q 1/03

(54) **Verfahren und Vorrichtung zur Bearbeitung von Werkstücken insbesondere zur Beschichtung**

(30) Priorität: 02.05.1997 DE 19718561
(71) Anmelder: Robert Bürkle GmbH & Co., 72250 Freudenstadt (DE)
(72) Erfinder: Bohn, Hans, 72296 Schopfloch (DE)
(74) Vertreter: Brommer, Hans Joachim, Dr.-Ing.

(57) **Zusammenfassung**

Die Erfindung betrifft ein Verfahren und eine Vorrichtung zum Bearbeiten plattenförmiger Werkstücke (3), insbesondere zu beschichtender Möbelteile mittels eines Auflagersystems. Dieses Auflagersystem besteht aus einer Grundplatte (1) mit zahlreichen Öffnungen, in denen Auflagebolzen (2) zur Aufnahme der Werkstücke (3) angeordnet sind. Diese Auflagebolzen (2) sind zwischen einer unteren passiven Position und einer oberen die Werkstücke (3) tragenden Position verfahrbar und stehen bei Zuführung der zu behandelnden Werkstücke (3) in ihrer oberen Position. Nach Auflage der Werkstücke (3) werden die nichtbelegten Auflagebolzen (2) in ihre untere Position verfahren.

## Beschreibung

Die Erfindung betrifft ein Verfahren und eine Vorrichtung zum Bearbeiten plattenförmiger Werkstücke, insbesondere zu beschichtender Möbelteile mittels eines Auflagersystems, das eine Grundplatte mit zahlreichen Öffnungen aufweist, in denen Auflagebolzen zur Aufnahme der Werkstücke zumindest zwischen einer unteren passiven Position und einer oberen, die Werkstücke tragenden Position verfahren werden, wobei die Position der Auflagebolzen auch davon abhängt, ob sie von einem Werkstück belegt sind oder nicht.

Hauptanwendungsfall ist das Beschichten dreidimensionaler Werkstücke, insbesondere Möbelteile, die nicht nur an ihrer Front, sondern vorzugsweise auch an den umlaufenden Seitenkanten mit einer Kunststoffolie, einem Furnier oder dergleichen beschichtet werden sollen. Das Beschichten erfolgt durch Anwendung von Wärme und Druck in einer Presse. Um deren Kapazität optimal zu nutzen, werden meist mehrere Werkstücke gleichzeitig in einer gemeinsamen Legepalette dem Auflagersystem der Presse zugeführt und dort gemeinsam beschichtet. Gegebenenfalls werden die Werkstücke dann nach dem Verlassen der Presse durch Ausschneiden aus der zusammenhängenden Folie vereinzelt.

Entsprechende Systeme sind beispielsweise in der DE 195 26 138, 44 43 753 und in der EP-A 744 280 beschrieben, auf die hinsichtlich der weiteren Verfahrens- und Vorrichtungsparameter vollinhaltlich Bezug genommen wird.

Der Oberbegriff des vorliegenden Anspruches 1 geht von der zuletzt genannten Schrift aus. Das dort beschriebene Auflagersystem arbeitet wie folgt:

Wenn die zu behandelnden Werkstücke zugeführt werden, befinden sich alle Auflagebolzen in ihrer unteren Position, das heißt, ihre Oberfläche fluchtet mit der Oberfläche der Grundplatte.

Damit die Folie an die von der Front der Werkstücke zurückspringenden Seitenflächen, insbesondere an deren Unterkanten, gut angelegt werden kann, müssen die Werkstücke ein Stück von der sie tragenden Grundplatte abgehoben werden. Dies geschieht durch die genannten Auflagebolzen, die in eine obere Position verfahren werden und dadurch die Werkstücke anheben. Dabei ist es jedoch störend, wenn auch solche Auflagebolzen hochfahren, die nicht von einem Werkstück belegt sind, weil beim anschließenden Beschichtungsvorgang die Folie an diesen freistehenden Bolzen haften bleibt und das anschließende Entfernen der Folie sehr umständlich und zeitraubend ist. Außerdem wird die heiße, weiche Folie durchstoßen.

Daher sind die Auflagebolzen im bekannten Fall als Steuerventile ausgebildet, derart, daß sie an ihrem oberen Ende gegenüber der sie umgebenden Grundplatte einen Ringspalt aufweisen. Dieser Ringspalt wird bei denjenigen Auflagebolzen, die ein Werkstück tragen, von der Werkstück-Unterseite abgedeckt, wogegen er bei den nicht belegten Auflagebolzen frei bleibt. Auf diese Weise werden automatisch nur diejenigen Auflagebolzen hochgefahren, die ein Werkstück tragen, wogegen die unbelegten Auflagebolzen in der unteren Passivposition verharren.

Ausgehend von dieser bekannten Lösung, die bei Membran-Pressen angewendet wird, besteht die Aufgabe der vorliegenden Erfindung darin, das bekannte System hinsichtlich seiner Zuverlässigkeit, insbesondere was die Positionierung der Werkstücke angeht, zu verbessern. Außerdem soll es auch für membranlose Beschichtungsanlagen geeignet sein. Nicht zuletzt soll sich die Steuerung der Auflagebolzen durch einen kostengünstigen Aufbau auszeichnen und hohe Arbeitsgeschwindigkeiten zulassen.

Diese Aufgabe wird hinsichtlich der Verfahrensmerkmale dadurch gelöst, daß die Auflagebolzen in ihrer oberen Position stehen, wenn die zu behandelnden Werkstücke zugeführt werden und daß nach Auflage der Werkstücke die nicht belegten Auflagebolzen in die untere Position fahren, bevor die Bearbeitung der Werkstücke, insbesondere also ihre Beschichtung beginnt.

Hierdurch ergibt sich der Vorteil, daß die Werkstücke nicht mehr wie bisher auf die Grundplatte oder auf die in der unteren Position befindlichen Auflagebolzen aufgelegt werden, sondern daß sie direkt in ihrer späteren Bearbeitungsposition zugeführt werden. Man spart sich dadurch das bisher notwendige Hochfahren der Werkstücke nach ihrer Eingabe in die Beschichtungsanlage.

Die Erfindung geht dabei von der Erkenntnis aus, daß man grundsätzlich bestrebt ist, die vorhandene Nutzfläche einer Palette so weit wie möglich mit Werkstücken auszulegen. Daher ist die Stückzahl der belegten Auflagebolzen vergleichsweise hoch, häufig über 1000, wogegen nur relativ wenig Auflagebolzen unbelegt bleiben. Beim Hochfahren einer großen Anzahl von Auflagebolzen mitsamt den daraufliegenden Werkstücken ist nicht gewährleistet, daß alle belegten Auflagebolzen zur gleichen Zeit und mit gleicher Geschwindigkeit hochfahren. Außerdem haben Untersuchungen der Anmelderin ergeben, daß die Hubgeschwindigkeit der einzelnen Bolzen um so größer wird, je mehr Auflagebolzen ihre obere Endposition erreicht haben.

Aufgrund dessen besteht die Gefahr, daß sich einzelne Werkstücke während des Hubvorganges relativ zueinander verschieben, so daß die Mindestabstände zum Nachbarwerkstück nicht mehr eingehalten werden.

Zur Umgehung dieses Problems könnte man die Hubbewegung erst dann beginnen, wenn die Folie schon leicht auf die im allgemeinen mit Kleber beschichteten Werkstücke aufgedrückt worden ist und sie somit in ihrer Lage fixiert. Dabei entsteht aber zumindest bei membranlosen Systemen der Nachteil, daß die auf Formtemperatur gebrachte Folie lokal die kalte Grundplatte berührt und dort ihre Formbarkeit verliert.

All diese Probleme werden durch das erfindungsgemäße System beseitigt, weil die Werkstücke auf die bereits in ihrer oberen Position befindlichen Auflagebolzen abgelegt werden. Ungleiche Hubgeschwindigkeiten oder zeitliche Differenzen spielen dabei keine Rolle. Die abzusenkenden Auflagebolzen haben keinen Kontakt mit den Werkstücken und können daher auch keine Verschiebung derselben bewirken.

Darüberhinaus hat die Erfindung den wesentlichen Vorteil, daß der Druckluftverbrauch drastisch reduziert wird, denn es brauchen immer nur die wenigen unbelegten Auflagebolzen verfahren werden.

Nicht zuletzt kann durch das nicht mehr notwendige Hochfahren der Werkstücke die Arbeitsgeschwindigkeit der Anlage gesteigert werden.

Wenn die Werkstücke bei aufeinanderfolgenden Beschichtungschargen in ihrer Größe oder Position unterschiedlich sind, so ändert sich damit auch die Belegung der Auflagebolzen. Es empfiehlt sich dann, jeweils vor Zufuhr der nächsten Werkstück-Charge die zuvor nicht belegten Auflagebolzen aus ihrer unteren Passivstellung nach oben zu fahren, damit sie zur Aufnahme von Werkstücken zur Verfügung stehen.

Zweckmäßig bleiben die belegten Auflagebolzen auch nach dem Entnehmen der bearbeiteten Werkstücke in ihrer oberen Position, wodurch sich die Taktzeit für das erfindungsgemäße Bearbeitungsverfahren nochmals verkürzt.

Für die praktische Durchführung des erfindungsgemäßen Verfahrens bieten sich dem Fachmann verschiedene Möglichkeiten. Bevorzugt werden die drei nachfolgend näher beschriebenen Alternativen.

Bei der ersten Alternative enthalten die Auflagebolzen einen ihnen gegenüber etwa vertikal verfahrbaren Taststift, der als Steuerventil für die Druckbeaufschlagung des Auflagebolzens fungiert, indem er in unbelegtem Zustand des Auflagebolzens nach oben vorsteht, während er bei Auflage eines Werkstückes nach unten gedrückt wird. Auf diese Weise bewirkt der Taststift eine Selektion zwischen den belegten und den unbelegten Auflagebolzen.

Dazu kann der Taststift einen Kolben aufweisen, der in der eingefahrenen unteren Stellung des Taststiftes die Strömungsverbindung zu einer Überdruck-oder Unterdruckquelle für das Herunterfahren des zugehörigen Auflagebolzens unterbricht.

Bei der zweiten Alternative haben die Auflagebolzen statt dessen eine nach oben offene Bohrung, die bei Auflegen eines Werkstückes verschlossen wird, so daß der Druck in dieser Bohrung zur Steuerung des Auflagebolzens dient, derart, daß er in unbelegtem Zustand von seiner oberen Position in die untere Position fährt. Statt einer Bohrung könnte auch ein Ringspalt am Umfang der Auflagebolzen vorgesehen sein.

Die dritte Alternative ist eine Kombination aus den beiden zuvor beschriebenen Bauformen. Bei sehr unebenen Auflageflächen der Werkstücke wird in der vorgenannten Bohrung zur Steuerung des Auflagebolzens kein ausreichender Staudruck erzeugt, so daß die Selektion zwischen belegten und unbelegten Auflagebolzen gefährdet ist. Zur Abhilfe wird in die genannte Bohrung ein Taststift mit einer Feder eingesetzt, wobei diese Feder dann, wenn der Taststift durch ein Werkstück nach unten gedrückt wird, eine verstärkte Kraft in Schließrichtung des Steuerventils für das Herunterfahren des zugehörigen Auflagebolzens ausübt. Dadurch ist die Selektion auch dann gewährleistet, wenn das obere Ende der Bohrung durch ein unebenes Werkstück nicht ganz verschlossen wird.

In den beiden letztgenannten Fällen kann die Steuerung des Auflagebolzens zweckmäßig über Kugelventile erfolgen, ebenso aber auch durch andere Ventilkonstruktionen.

In beiden Fällen ist es zweckmäßig, daß die Auflagebolzen in ihrer abgesenkten Passivposition von der Druckquelle zum Obenhalten der belegten Auflagebolzen abgeschnitten sind.

Schließlich empfiehlt es sich noch, die Führung der Auflagebolzen in ihrer Grundplatte, also insbesondere die Passungsverhältnisse so zu wählen, daß die Auflagebolzen durch Reibkraft in ihrer oberen Position verharren, selbst dann, wenn sie durch ein Werkstück belastet sind. Man braucht dann den hohen Druck von etwa 6 bar zum Obenhalten der Auflagebolzen nur beim Anpressen der Folie.

Weitere Merkmale und Vorteile der Erfindung ergeben sich aus der nachfolgenden Beschreibung von Ausführungsbeispielen anhand der Zeichnung; dabei zeigt
- Figur 1: einen schematischen Vertikalschnitt durch eine Beschichtungspresse;
- Figur 2: den Ablauf des Beschichtungsvorgangs;
- Figur 3: Schnittdarstellungen des Auflagebolzens gemäß einer ersten Alternative in unterschiedlichen Betriebszuständen;
- Figur 4: Schnittdarstellungen des Auflagebolzens gemäß einer zweiten Alternative in unterschiedlichen Betriebszuständen;
- Figur 5: eine Schnittdarstellung des Auflagebolzens gemäß einer dritten Alternative;
- Figur 6: eine Schnittdarstellung des Auflagebolzens gemäß einer vierten Alternative und
- Figur 7: eine Draufsicht auf den Schieber aus Figur 6.

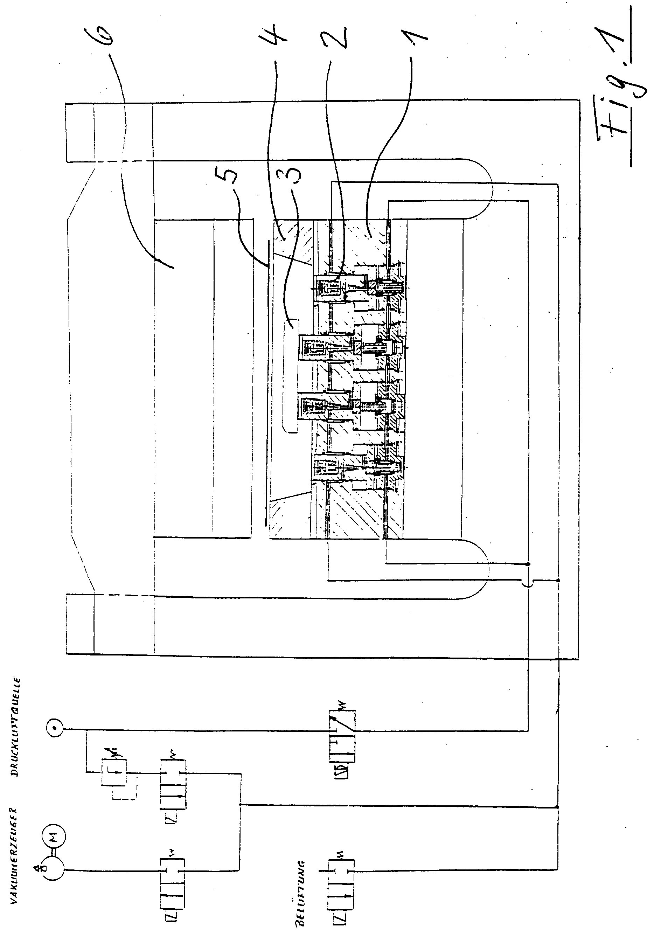

In Figur 1 erkennt man den prinzipiellen Aufbau einer Beschichtungspresse bestehend aus einer Grundplatte 1, die auf einem unteren Preßtisch angeordnet ist und die eine Vielzahl rasterartig verteilter Auflagebolzen 2 enthält. Diese Auflagebolzen 2 sind durch pneumatische Ansteuerung vertikal verfahrbar in der Grundplatte 1 gelagert, derart, daß sie in ihrer unteren Position oben ungefähr mit der Grundplatte 1 fluchten, wogegen sie in der oberen Position ein Werkstück 3 in einer von der Grundplatte distanzierten Position tragen.

In der Praxis werden mehrere Werkstücke 3 gleichzeitig in die Beschichtungspresse eingelegt und beschichtet und demzufolge sind auch viel mehr Auflagebolzen in einer Grundplatte enthalten als in der Zeichnung dargestellt.

Die Zufuhr der Werkstücke in die Presse erfolgt im allgemeinen mit Hilfe einer gelochten Palette 4, auf die später noch näher eingegangen wird. Oberhalb der Palette ist eine Kunststoffolie 5 angedeutet und darüber ein Druckkopf 6, der das Beheizen und Anpressen der Folie an die Werkstücke bewirkt. Der Druckkopf 6 besteht aus einem oberen Preßtisch mit Heizplatte.

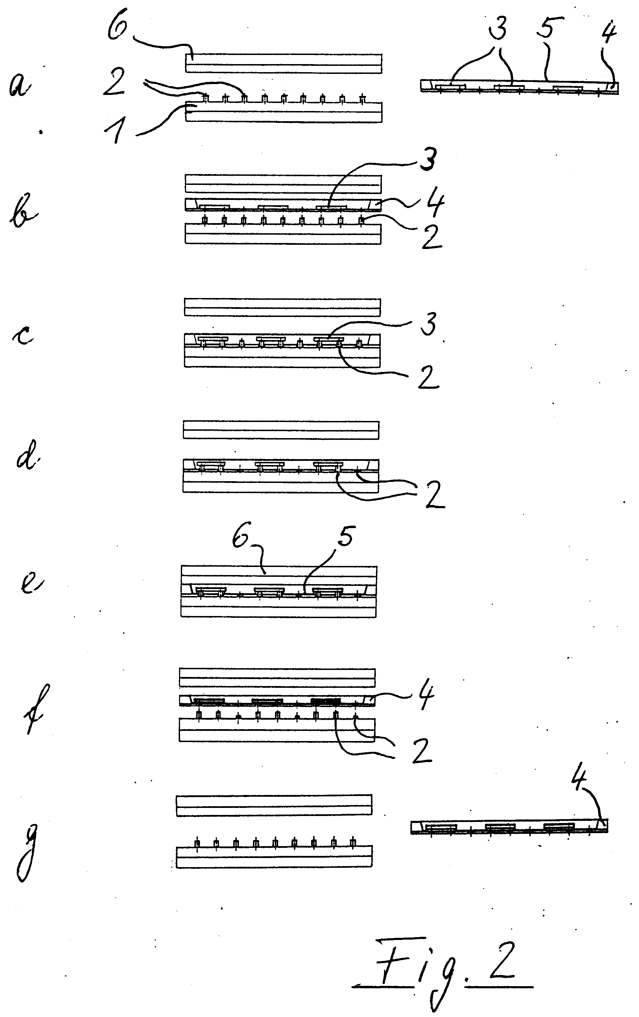

Der Ablauf des Beschichtungsvorganges wird anhand von Figur 2 erläutert: In Figur 2a erkennt man im rechten Teil die Palette 4, in der die zu beschichtenden Werkstücke 3 so arrangiert werden, daß möglichst viele Werkstücke hineinpassen. Sodann wird die gemeinsame Folie 5 aufgelegt. Im linken Teil von Figur 2a sieht man die Presse in geöffnetem Zustand. Wesentlich dabei ist, daß alle Auflagebolzen 2 in ihrer hochgefahrenen Position stehen, so daß hierfür keine Taktzeit mehr anfällt.

In Figur 2b ist die Palette mit den Werkstücken in die Presse eingefahren. Dabei wird in an sich bekannter Weise automatisch dafür gesorgt, daß die Palette so zu liegen kommt, daß über jedem Auflagebolzen 2 eine Palettenöffnung ist, damit die Auflagebolzen später durch die Palette hindurchtreten und in Anlage mit den Werkstücken kommen können.

Figur 2c zeigt, daß die Palette aus ihrer eingefahrenen Position abgesenkt worden ist auf die Grundplatte 1. In diesem Zustand liegen die Werkstücke auf den Auflagebolzen auf und werden von diesen getragen.

Im nächsten Schritt, der in Figur 2d dargestellt ist, werden diejenigen Auflagebolzen, die nicht von Werkstücken belegt sind, abgesenkt.

Sodann fährt die Beschichtungspresse gemäß Figur 2e zusammen, die Beschichtungsfolie 5 wird erhitzt und durch oberhalb der Folie aufgebauten Überdruck und unterhalb von ihr erzeugten Unterdruck gegen die Oberseite wie auch gegen die vertikalen Seitenränder der Werkstücke gepreßt.

Sodann wird die Presse wieder geöffnet, die Palette über das Niveau der immer noch hochstehenden Auflagebolzen angehoben (Figur 2f) und wieder seitlich herausgefahren (Figur 2g). Es ist aber auch möglich, das Anheben der Palette zu sparen und statt dessen alle Auflagebolzen nach unten zu fahren.

Außerdem zeigt Figur 2g, daß die im vorherigen Beschichtungszyklus nicht belegten Auflagestäbe wieder hochgefahren worden sind.

Anhand der Figur 2e und 2f wird deutlich, daß die zur Beschichtung erhitzte Folie überhaupt nicht oder nur in minimalem Umfang mit der Grundplatte in Berührung kommt, wodurch Wärmeverluste weitgehend vermieden werden. Die Folie kann die Grundplatte erst dann berühren, wenn die Werkstücke schon oben und in ihrer vollen Seitenrand-Höhe beschichtet sind.

Der Beschichtungsvorgang ist vorstehend nur in Stichworten beschrieben, da er an sich bekannt ist. Dabei liegt es auch im Rahmen der Erfindung, die Beschichtung nicht wie beschrieben membranlos durchzuführen sondern mittels einer Membranpresse, die ebenfalls bereits bekannt ist. Ebenso kann die Beheizung der Membran und Ihre Beaufschlagung mit Überdruck und/oder Unterdruck in weitem Rahmen variiert werden.

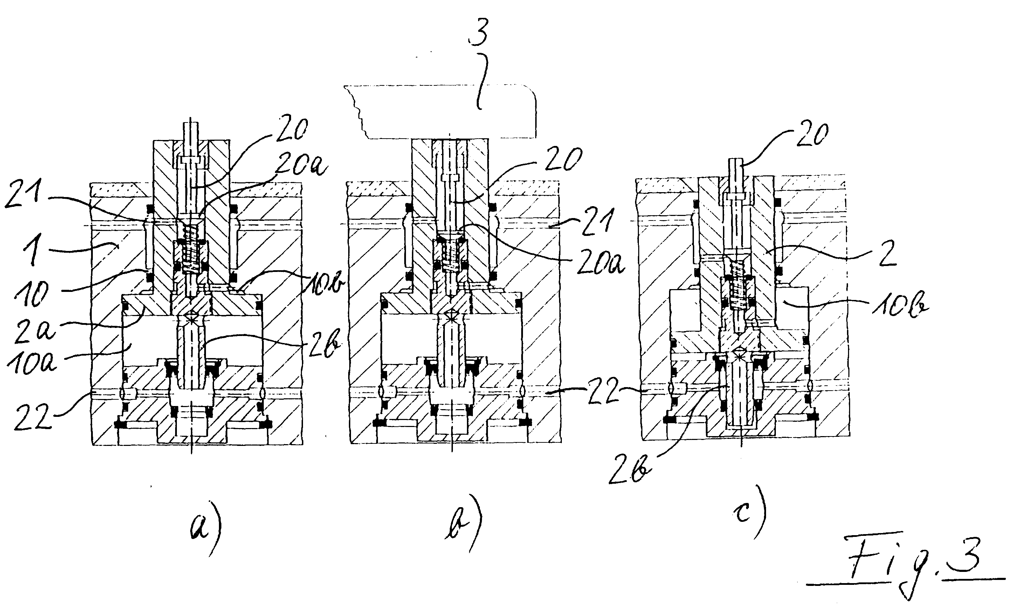

Figur 3 zeigt eine vergrößerte Darstellung eines Auflagebolzens im Vertikalschnitt in unterschiedlichen Betriebszuständen. Man erkennt, daß der Auflagebolzen 2 eine vergrößerte untere Kolbenfläche 2a aufweist und daß er in entsprechend abgestuften Zylinderräumen 10 und 10a der Grundplatte 1 vertikal verfahrbar geführt ist. Der obere Teil des Auflagebolzens 2 enthält einen vertikal verschiebbaren Taststift 20, der durch eine Feder 21 nach oben gedrückt wird, so daß er an der Oberseite des Auflagebolzens 20 vorsteht. In seinem mittleren Bereich weist der Taststift einen Kolbenring 20a auf, der mit einer Luftanschlußleitung 21 derart korrespondiert, daß sich deren Druck in den Raum unterhalb des Kolbenringes 20a oder oberhalb desselben fortpflanzt, je nachdem, ob der Taststift 20a sich in der gezeichneten oberen Position befindet oder in einer tieferen Position, die sich beim Auflegen eines Werkstückes auf den Auflagebolzen ergibt.

Der untere Zylinderraum 10a ist über eine Leitung 22 an eine Überdruckquelle, jedoch mit höheren Druck als an der Leitung 21, angeschlossen. Dadurch wird der Auflagebolzen 2 auch dann in der gezeichneten oberen Position gehalten, wenn während des Beschichtungsvorganges erheblich Kräfte nach unten entstehen. Wesentlich ist nun, daß der Kolben 2a einen Fortsatz 2b aufweist, der die Verbindung des Zylinderraumes 10a mit der Druckluftleitung 22 steuert: Befindet sich der Kolben 2a in der gezeichneten oberen Position, so läßt der Fortsatz 2b Druckluft von der Leitung 22 in den Zylinderraum 10a einströmen. Befindet er sich dagegen in seiner unteren Position, wie sie in Figur 3c dargestellt ist, so schneidet er die Druckluftzufuhr von der Leitung 22 ab und der Auflagebolzen 2 bleibt in der unteren Passivposition.

Somit ergibt sich folgende Funktion: In Figur 3a ist die Position aller Auflagebolzen vor dem Beschicken mit neuen Werkstücken dargestellt. Diese obere Position der Lagebolzen kann durch Unterdruck an der Leitung 21 herbeigeführt werden. Dieser Unterdruck pflanzt sich von dem Raum unterhalb des Kolbenringes 20a nach unten in einen Raum 10 b oberhalb des Kolbens 2a fort und zieht somit den Auflagebolzen 2 hoch. Diese Stellung wird auch in drucklosem Zustand beibehalten, weil die Reibungskräfte an den gezeichneten Dichtungsringen meist höher sind als die Gewichtskraft des Auflagebolzens und des von ihm zu tragenden Werkstückgewichtes.

Figur 3b zeigt die Position eines belegten Auflagebolzens nach dem Einfahren und Absenken der Palette, so daß die Werkstücke nunmehr von den unter ihnen stehenden Auflagebolzen getragen werden. Dabei sind die Taststifte 20 durch das Gewicht der Werkstücke nach unten gedrückt, worauf später noch näher eingegangen wird. Festzuhalten ist jedoch, daß der belegte Auflagebolzen während des gesamten Beschichtungsvorganges die in Figur 3b gezeigte Position beibehält. Um dem von der Beschichtungspresse erzeugten Anpressdruck standzuhalten, wird er über die Leitung 22 mit einem Druck in der Größenordnung von 6 bar beaufschlagt.

Demgegenüber zeigt Figur 3c die Position eines unbelegten Auflagebolzens während des Beschichtungsvorganges. Man sieht, daß er sich in der abgesenkten Position befindet und der Taststift 20 nach oben vorragt. Der Absenkvorgang erfolgt sofort nach dem Absenken der Palette in die Beschichtungspresse, also nach dem Auflegen der Werkstücke auf die Auflagebolzen. Dazu wird an der Leitung 21 ein schwacher Überdruck angelegt. Dieser Überdruck kann sich bei hochstehenden Taststiften 20, d.h. bei unbelegten Auflagebolzen, dem Ringraum 10 b oberhalb dem Kolben 2a mitteilen. Dies hat zur Folge, daß alle unbelegten Auflagebolzen nach unten fahren. Der Fortsatz 2b schneidet dabei die Verbindung zwischen der Druckluftleitung 22 und dem Zylinderraum 10a ab, wie in Figur 3 dargestellt.

Demgegenüber kann sich der Überdruck in Leitung 21 bei den belegten Auflagebolzen gemäß Figur 3b nicht auswirken, weil dort der Taststift 20 mit seinem Kolben 20a die Verbindung zwischen der Leitung 21 und dem oberen Ringraum 10b unterbricht, vergleiche Figur 3b. Die Druckluftquelle an der Leitung 21 wird nach dem Absenken der unbelegten Auflagebolzen abgeschaltet.

Auf diese Weise bewirken die Taststifte 20 eine automatische Selektion zwischen den belegten und den unbelegten Auflagebolzen, derart, daß erstere während des Beschichtungsvorganges in der oberen Position bleiben, letztere hingegen nach unten fahren.

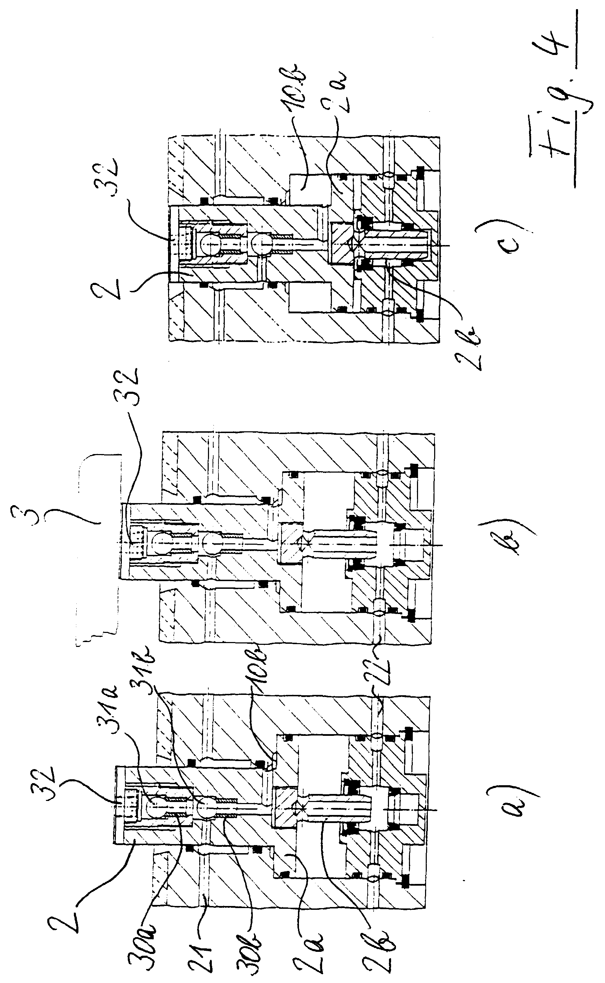

Figur 4 zeigt eine Alternativkonstruktion für die beschriebene Selektion der Auflagebolzen. Dabei haben die Auflagebolzen prinzipiell den gleichen Aufbau wir in Figur 3. Jedoch sind anstelle der Führung für den Taststift 20 zwei übereinander angeordnete Ventilsitze 30a und 30b vorgesehen und der Taststift selbst ist ersetzt durch zwei Kugeln 31a und 31b, die auf den genannten Ventilsitzen lose aufliegen. Man erhält somit ein Steuerventil 30a, 31a, das zwischen der Leitung 21 und einer oberen Öffnung 32 des Auflagebolzens angeordnet ist und ein weiteres Steuerventil, das zwischen der Leitung 21 und dem Ringraum 10b oberhalb des Kolbens 2a angeordnet ist.

Die Funktion ist die gleiche wie in Figur 3: Vor dem Beschicken befinden sich alle Auflagebolzen 2 in ihrer hochgefahrenen Position, was durch Unterdruck an der Leitung 21 ausgelöst wird. Dieser Unterdruck pflanzt sich in den Ringraum 10b fort und zieht somit die Kolben 2a in ihre obere Position, soweit sie diese nicht schon innehatten. Die obere Kugel 31a dichtet dabei den Unterdruck gegenüber der Umgebung ab.

Nach dem Auflegen der Werkstücke auf die Auflagebolzen gemäß Figur 4b wird an der Leitung 21 ein schwacher, aber abrupter Überdruckimpuls erzeugt. Dieser Druckimpuls kann sich bei den belegten Auflagebolzen gemäß Figur 4b nicht auswirken, weil dort das aufgelegte Werkstück die Öffnungen 32 verschließt. Bei den unbelegten Auflagebolzen gemäß Figur 4 bläst jedoch der Druckimpuls die Kugel 31b aus ihrem Sitz 30b und pflanzt sich nach oben wie auch nach unten fort. Dadurch wird der Ringraum 10b oberhalb des Kolbens 2a mit Luft gefüllt und die unbelegten Lagebolzen fahren in die untere Position gemäß Figur 4c. Die Druckluftleitung 22 wird dadurch wieder von dem Zylinder 10a der unbelegten Lagebolzen abgeschnitten.

Überdruck auf der Leitung 22 kann sich somit nur bei den belegten Auflagebolzen auswirken und diese trotz der während des Beschichtungsvorganges auftretenden Gegenkräfte in der oberen Position halten.

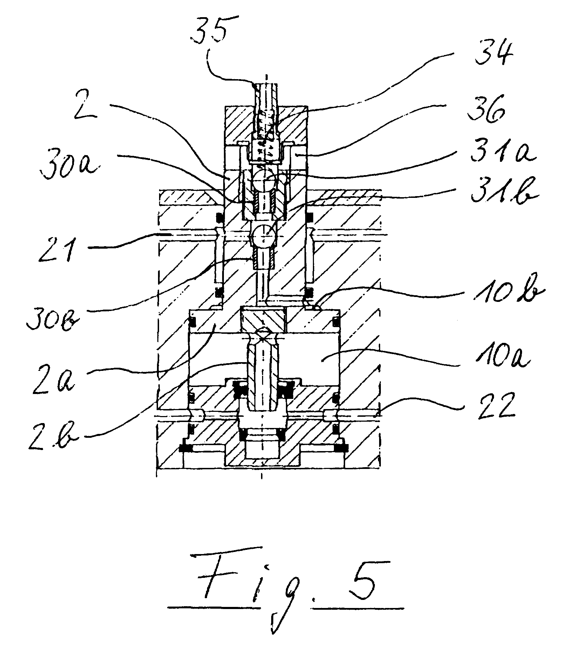

Figur 5 zeigt eine dritte Alternative. Der prinzipielle Aufbau der Auflagebolzen 2 ist dabei der gleiche wie in Figur 4, jedoch kann die obere Ventilkugel 31a durch eine Feder 34 in Schließrichtung belastet werden. Dazu stützt sich die Feder 34 mit ihrem der Ventilkugel 31a abgewandten Ende an einem Taststift 35 ab. Dieser Taststift 35 ist vertikal verschiebbar im Auflagebolzen 2 geführt und steht ebenso wie der Taststift 20 aus Figur 3 aufgrund der auf ihn einwirkenden Federkraft ein Stück nach oben vor.

Beim Auflegen eines Werkstückes wird der Taststift 35 nach unten gedrückt, dadurch erhöht sich die Spannung der Feder 34 und demzufolge wird das Ventil 30a/31a beim Auflegen eines Werkstückes zuverlässiggeschlossen. Dadurch kann das untere Ventil 30b/31b, das zwischen der Druckleitung 21 und dem Ringraum 10b angeordnet ist, nicht mehr geöffnet, insbesondere die Kugel 31b nicht mehr von ihrem Sitz geblasen werden. Seitliche Öffnungen 36 oberhalb des Ventils 30a/31a erlauben einen Luftaustritt, wenn die Ventilkugel 31a bei unbelegtem Auflagebolzen von ihrem Sitz abgehoben wird. Zusätzlich kann auch der Taststift 35 hohl ausgebildet sein.

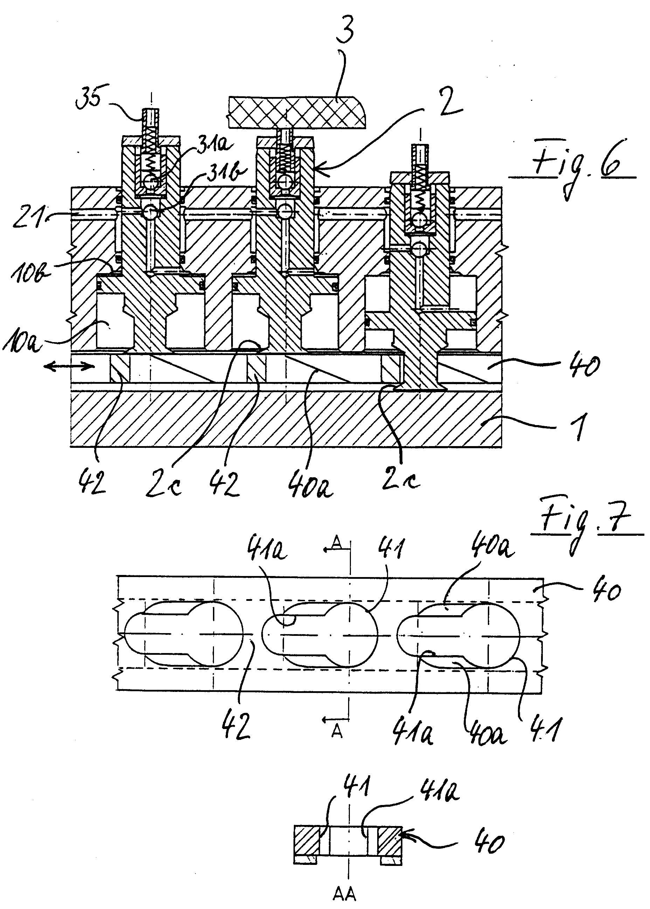

Figur 6 zeigt eine vierte Alternative, die hinsichtlich des Taststiftes weitgehend der Bauform gemäß Figur 5 entspricht. Daher sind insoweit auch die gleichen Bezugszeichen eingetragen. Das Besondere an dieser Alternative besteht darin, daß in der Grundplatte 1 mehrere nebeneinander angeordnete, horizontal verfahrbare Schieber 40 gelagert sind, die zwischen zwei verschiedenen Positionen verstellbar sind. Die Aufgabe dieser Schieber besteht primär darin, diejenigen Auflagebolzen 2, die ein Werkstück tragen und deshalb in der oberen Position bleiben sollen, mechanisch abzustützen. Dazu weist jeder Schieber eine Vielzahl von Öffnungen 41 auf, die den gleichen Abstand haben wie die Auflagebolzen 2 und in der einen Schieberstellung das vertikale Verfahren der Auflagebolzen durch die genannten Öffnungen 41 hindurch gestatten. In der anderen Schieberposition werden die Öffnungen 41 hingegen aus ihrer fluchtenden Zuordnung zu den Auflagebolzen 2 seitlich herausgefahren mit der Folge, daß die in der oberen Position stehenden, von einem Werkstück belegten Auflagebolzen nicht mehr nach unten absinken können, weil sie von Zwischenstegen 42 des Schiebers 40 getragen werden.

Im Ausführungsbeispiel befinden sich die Zwischenstege 42 des Schiebers 40 direkt unterhalb der Auflagebolzen 2. Es liegt aber auch im Rahmen der Erfindung, den Schieber 40 auf einem höheren Niveau anzuordnen, so daß er seitlich in Horizontalschlitze der Auflagebolzen einfahren und sie dadurch formschlüssig abstützen kann.

In beiden Fällen ergibt sich der Vorteil, daß die Auflagebolzen 2 in ihrer oberen Position nicht mehr durch hohen Überdruck abgestützt werden brauchen, sondern statt dessen mechanisch verriegelt werden. Dadurch braucht man keinen hohen Überdruck mehr und der Luftverbrauch reduziert sich drastisch.

Darüberhinaus bietet der Schieber 40 auch die Möglichkeit, die abgesenkten Auflagebolzen in ihrer unteren Position mechanisch zu verriegeln. Dazu weisen die Auflagebolzen an ihrem unteren Ende einen seitlichen Überstand 2c auf, der so bemessen ist, daß er bei abgesenktem Auflagebolzen den Schieber 40 untergreift. Die Öffnung 41 des Schiebers 40 ist dabei so groß, daß der seitliche Überstand 2c noch durch die Öffnung 41 hindurchpaßt. Wird nun aber der Schieber 40 nach dem Absenken der unbelegten Auflagebolzen 2 in die Verriegelungsstellung verschoben, wie in Figur 6 dargestellt, so kann der seitliche Überstand 2c nicht mehr nach oben; der Auflagebolzen 2 wird also in der unteren Position arretiert. Gleichzeitig werden die in der oberen Position befindlichen Auflagebolzen an ihrer Unterseite abgestützt und können somit nicht nach unten ausweichen.

Um eine wirkungsvolle mechanische Verriegelung der Auflagebolzen in ihrer oberen oder unteren Position zu gewährleisten, empfiehlt es sich, die Öffnungen 41 in Verstellrichtung des Schiebers 40 jeweils durch einen Schlitz 41a zu verlängern, wobei der Schlitz 41a eine geringere Breite aufweist als der Durchmesser der Öffnung 41. Man verbessert dadurch den formschlüssigen Eingriff zwischen dem Schieber 40 und den Auflagebolzen 2.

Desweiteren ist es zweckmäßig, den Schieber 40 mit schräg ansteigenden Rampen 40a zu versehen, wie in Figur 6 angedeutet. Diese schrägen Rampen gehen von einem niedrigen Niveau im Bereich der Öffnungen 41 aus und verlaufen etwa parallel zu dem Schlitz 41a mit leichtem Anstieg nach oben. Ihre Funktion besteht darin, Auflagebolzen 2, die eigentlich in der oberen Position stehen sollen, die sich aber möglicherweise durch hohe Werkstückbelastung, Undichtigkeiten oder andere Ursachen ein kleines Stück abgesenkt haben, wieder hochzudrücken, damit sie die Verstellung des Schiebers 40 in die Verriegelungsposition nicht blockieren können.

Aus dem gleichen Grund sind auch die seitlichen Überstände 2c am unteren Ende eines jeden Auflagebolzens mit schrägen Flanken versehen. Falls also ein unbelegter Auflagestempel nicht genau seine untere Position einnimmt, wird er während der Verstellung des Schiebers 40 nach unten gedrückt und kann die Verstellung nicht vorzeitig blockieren.

Zusammenfassend bietet das erfindungsgemäße Verfahren und die zugehörigen Vorrichtungsvarianten zur Durchführung desselben den Vorteil, daß durch die Beschickung der Beschichtungspresse bei angehobenen Lagebolzen ein ungewolltes Verrutschen der Werkstücke während des Hochfahrens der Auflagebolzen ausgeschlossen ist, daß beim Anpressen der heißen Folie ein Kontakt mit der kalten Grundplatte weitestgehend vermieden wird und die Taktzeit des Verfahrens verkürzt wird. Schließlich wird durch die mechanische Abstützung der Auflagebolzen mittels Schieber die Zuverlässigkeit der Anlage erhöht.

## Patentansprüche

1. Verfahren zum Bearbeiten plattenförmiger Werkstücke (3) insbesondere zu beschichtender Möbelteile, mittels eines Auflagersystems, das eine Grundplatte (1) mit zahlreichen Öffnungen aufweist, in denen Auflagebolzen (2) zur Aufnahme der Werkstücke zumindest zwischen einer unteren passiven Position und einer oberen, die Werkstücke tragenden Position verfahren werden, wobei die Position die Auflagebolzen (2) auch davon abhängt, ob sie von einem Werkstück (3) belegt sind oder nicht,
dadurch gekennzeichnet,
daß die Auflagebolzen (2) in ihrer oberen Position stehen, wenn die zu behandelnden Werkstücke (3) zugeführt werden und daß nach Auflage der Werkstücke die nicht belegten Auflagebolzen (2) in die untere passive Position fahren.

2. Verfahren nach Anspruch 1,
dadurch gekennzeichnet,
daß die nicht belegten Auflagebolzen (2) vor Zufuhr der nächsten Charge zu behandelnder Werkstücke (3) in ihre obere Position fahren.

3. Verfahren nach Anspruch 1,
dadurch gekennzeichnet,
daß die belegten Auflagebolzen (2) während der Werkstück-Bearbeitung, insbesondere des Beschichtungsvorganges, in ihrer oberen Position bleiben.

4. Verfahren nach Anspruch 1,
dadurch gekennzeichnet,
daß die belegten Auflagebolzen (2) nach dem Entnehmen der bearbeiteten Werkstücke in ihrer oberen Position bleiben.

5. Verfahren nach Anspruch 1,
dadurch gekennzeichnet,
daß die belegten Auflagebolzen (2) mechanisch in ihrer oberen Position verriegelt werden, insbesondere nach dem Absenken der unbelegten Auflagebolzen.

6. Verfahren nach Anspruch 1,
dadurch gekennzeichnet,
daß die unbelegten Auflagebolzen (2) nach ihrer Absenkbewegung mechanisch in ihrer unteren Position verriegelt werden, insbesondere gleichzeitig mit der Verriegelung der belegten Auflagebolzen.

7. Vorrichtung zur Durchführung des Verfahrens nach einem der vorhergehenden Ansprüche,
dadurch gekennzeichnet,
daß die Auflagebolzen (2) einen etwa vertikal verfahrbaren Taststift (20, 35) aufweisen, der als Steuerventil für die Druckbeaufschlagung des Auflagebolzens (2) fungiert und in unbelegtem Zustand des Auflagebolzens nach oben vorsteht, während er bei Auflage eines Werkstückes nach unten nachgibt.

8. Vorrichtung nach Anspruch 7,
dadurch gekennzeichnet,
daß der Taststift (20, 35) in seiner eingefahrenen unteren Stellung die Strömungsverbindung (21) für das Herunterfahren des zugehörigen Auflagebolzens (2) blockiert.

9. Vorrichtung zur Durchführung des Verfahrens nach einem der Ansprüche 1 bis 6,
dadurch gekennzeichnet,
daß die Auflagebolzen (2) eine nach oben offene, von einem aufliegenden Werkstück (3) verschließbare Bohrung (32) aufweisen und daß der Druck in dieser Bohrung zur Steuerung des jeweiligen Auflagebolzens dient.

10. Vorrichtung nach Anspruch 7,
dadurch gekennzeichnet,
daß der Taststift (20, 35) eine zur Umgebung offene Bohrung (36) aufweist, die an die Strömungsverbindung (21) für das Herunterfahren des zugehörigen Auflagebolzens (2) angeschlossen ist unter Zwischenschaltung zumindest eines Ventils (30a/31a; 30b/31b), das bei heruntergedrücktem Taststift die Strömungsverbindung (21) für das Herunterfahren des Auflagebolzens blockiert, bei nicht heruntergedrücktem Taststift freigibt.

11. Vorrichtung nach Anspruch 10,
dadurch gekennzeichnet,
daß das Ventil einen Ventilkörper (31a) aufweist, auf den eine Feder (34) im Schließsinn einwirkt und daß sich diese Feder in Gegenrichtung derart am Taststift (35) abstützt, daß beim Herunterdrücken des Taststiftes die Federspannung im Schließsinn zunimmt.

12. Vorrichtung nach Anspruch 11,
dadurch gekennzeichnet,
daß die Steuerung der Auflagebolzen (2) durch Kugelventile (30a, 31a; 30b, 31b) erfolgt.

13. Vorrichtung nach einem der Ansprüche 7 bis 12,
dadurch gekennzeichnet,
daß die Auflagebolzen (2) in ihrer abgesenkten Passivposition von der Druckquelle zum Obenhalten der Auflagebolzen abgeschnitten sind.

14. Vorrichtung nach einem der Ansprüche 7 bis 13,
dadurch gekennzeichnet,
daß die Auflagebolzen (2) derart in ihrer oberen Position in der Grundplatte (1) geführt sind, daß sie durch Reibschluß ihr Eigengewicht und das Gewicht der aufliegenden Werkstücke tragen.

15. Vorrichtung nach einem der Ansprüche 7 bis 14,
dadurch gekennzeichnet,
daß die Auflagebolzen (2) durch mindestens einen verfahrbaren Schieber (40) in ihrer oberen oder gegebenenfalls unteren Position mechanisch verriegelbar sind.

16. Vorrichtung nach Anspruch 15,
dadurch gekennzeichnet,
daß der Schieber (40) eine Vielzahl von Öffnungen (41) aufweist, die in der einen Schieberposition das vertikale Verfahren der Auflagebolzen (2) gestatten, in der anderen Schieberposition jedoch zumindest die hochgefahrenen Auflagebolzen (2) blockieren.
